# EUROPÄISCHE PATENTSCHRIFT

(11) **EP 1 460 307 B1**
(45) Veröffentlichungstag und Bekanntmachung des Hinweises auf die Patenterteilung: **09.01.2008**
(21) Anmeldenummer: 04005064.3
(22) Anmeldetag: 04.03.2004
(51) Int. Cl.: F16H 7/12

(54) **Spanneinrichtung für einen Zugmitteltrieb**
Tensioner for a traction mechanism
Tendeur pour mécanisme de traction

(30) Priorität: 19.03.2003 DE 10312321
(43) Veröffentlichungstag der Anmeldung: 22.09.2004
(73) Patentinhaber: CLAAS Selbstfahrende Erntemaschinen GmbH, 33428 Harsewinkel (DE)
(72) Erfinder: Buchmann, Norbert, 33428 Harsewinkel (DE)

(56) Entgegenhaltungen:
- EP-A- 0 126 808
- DE-C1- 19 501 685
- US-A- 2 663 195
- US-A- 5 026 330
- US-A- 5 120 277
- PATENT ABSTRACTS OF JAPAN Bd. 011, Nr. 272 (M-622), 4. September 1987 (1987-09-04) & JP 62 075165 A (TOYODA AUTOM LOOM WORKS LTD), 7. April 1987 (1987-04-07)

## Beschreibung

Die Erfindung bezieht sich auf eine Spanneinrichtung für einen Zugmitteltrieb, insbesondere für den Antrieb verschiedenartiger Arbeitsvorrichtungen an landwirtschaftlichen Erntemaschinen, nach dem Oberbegriff des Patentanspruchs 1.

An selbstfahrenden und gezogenen Landmaschinen werden für den Antrieb der einzelnen Funktionsbaugruppen beispielsweise Keilriementriebe verwendet, die eine der Maschinenleistung entsprechende Antriebskraftübertragung gewährleisten müssen. Um dies ständig, und auch unter erschwerten Erntebedingungen zu ermöglichen, ist eine für die jeweilige Leistungsübertragung notwendige Spannung der Keilriemen erforderlich. Dies wird durch eine jedem Keilriementrieb zugeordnete Spanneinrichtung erreicht. Derartige Einrichtungen sind bereits in verschiedenen Ausführung gen bekannt.

So ist beispielsweise in der EP 0 126 808 B1 eine federbelastete Spanneinrichtung mit integrierter Überlastungssicherung für einen Keilriementrieb dargestellt, bei der eine Druckfeder mit einer Vorspanneinrichtung die spannkraft über eine Zugstange auf einen schwenkbaren Doppelhebel überträgt. Am anderen Ende des Doppelhebels ist eine Spannrolle gelagert, die auf den zu spannenden Keilriemen so einwirkt, dass die für die Antriebskraftübertragung erforderliche Riemenspannung in ausreichendem Maß vorhanden ist. Die Druckfeder ist an einer Federhalterung zwischen Widerlagern an der Zugstange und einer mit dem Maschinenrahmen verbundenen festen Halterung angeordnet. Die jeweils erforderliche Vorspannung der Druckfeder wird durch Drehen der Widerlager an der Zugstange eingestellt. Aufgrund der aufwendigen Ausführung erfordert diese Spanneinrichtung jedoch einen verhältnismäßig hohen Herstellungsaufwand.

Bei einer weiterhin bekannten Spanneinrichtung besteht die Federhalterung für die Druckfeder im Wesentlichen aus einer an einem Widerlager befestigten Stütz- und Führungshülse, die mit einer Koppelstange schraubbar verbunden ist. Durch Drehen der Stütz- und Führungshülse wird die Spannung der auf ihr angeordneten Druckfeder eingestellt. Die Federspannung wird über die Koppelstange auf einen Doppelhebel übertragen, an dem eine Spannrolle für einen Keilriemen gelagert ist. Das Vorspannen der Druckfeder erfolgt bei gelöster Spannrolle, indem zwischen der Federabstützung und dem Federende hilfsweise lagegesicherte Distanzstücke angebracht werden, die nach der Montage wieder entfernt werden. Die so eingestellte Federspannung wirkt dann auf die Spannrolle des Keilriementriebes ein. Da die für das Vorspannen der Druckfeder notwendigen Arbeiten sehr arbeits- und kraftaufwendig sind und darüber hinaus der Herstellungsaufwand für die erforderlichen Einzelteile hohe Kosten verursacht, ist die Nutzung dieser Vorrichtung mit erheblichen Nachteilen verbunden.

Aus der US 2,663,195 A, die alle Merkmale des Oberbegriffes des Anspruchs 1 offenbart, der DE 195 01 685 C1, der JP 62 075 165 A oder der US 5,026,330 A sind beispielsweise Spanneinrichtungen für einen Zugmitteltrieb bekannt, bei denen die Druckfeder auf zwei gegensinnig angeordneten, gleichartigen Führungshülsen angeordnet ist. Nachteilig an den bekannten Spanneinrichtungen ist es, dass aufgrund der Reibung zwischen den Federwindungen der Druckfeder und den Anlageflächen auf den Führungshülsen ein erheblicher Kraftaufwand zur Einstellung der Vorspannung der Druckfeder erforderlich ist.

Der Erfindung liegt die Aufgabe zugrunde, die Federhalterung für die einstellbare Druckfeder so auszuführen, dass sowohl die Herstellungskosten wesentlich verringert werden als auch die Einstellung für die Vorspannung der Druckfeder vereinfacht und der dafür notwendige Zeit- und Kraftaufwand gesenkt wird.

Erfindungsgemäß wird diese Aufgabe durch die im Patentanspruch 1 genannten Merkmale gelöst. Weitere vorteilhafte Ausführungen des Erfindungsgegenstandes ergeben sich aus den nachgeordneten Ansprüchen.

Durch die erfindungsgemäße Ausführung der Spanneinrichtung für einen Keilriementrieb wird mit einem geringen Herstellungs- und Einstellaufwand eine funktionssichere Arbeitsweise der Antriebsvorrichtungen und eine volle Auslastung der Maschinenkapazität der mit einer solchen Einrichtung ausgerüsteten Maschinen erreicht.

Die Erfindung wird nachstehend an zwei Ausführungsbeispielen näher erläutert. In der zugehörigen Zeichnung zeigen:
- Fig. 1: die Seitenansicht einer einfach wirkenden Spanneinrichtung für einen Keilriementrieb,
- Fig. 2: den Schnitt A-A nach Fig. 1,
- Fig. 3: die Seitenansicht einer doppelt wirkenden Spanneinrichtung für zwei Keilriementriebe,
- Fig. 4: den Schnitt B-B nach Fig. 3 und

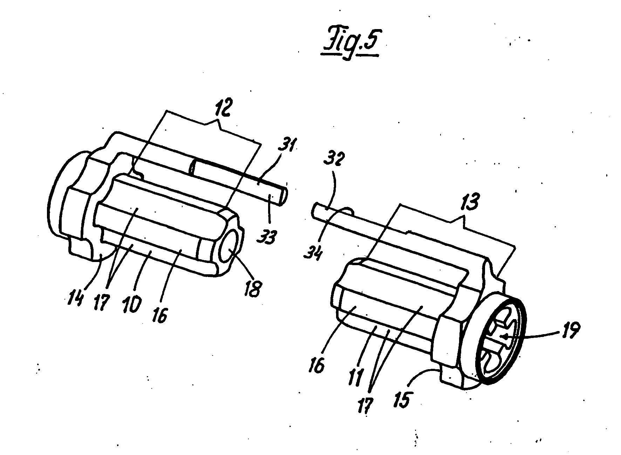

- Fig. 5: eine perspektivische Darstellung der beiden Führungshülsen für die Druckfeder.

Der Antrieb verschiedener Funktionsbaugruppen einer in der Zeichnung nicht dargestellten landwirtschaftlichen Erntemaschine erfolgt über mehrere Keilriementriebe, die an den Seitenwänden des Maschinenrahmens angeordnet sind. Zur Gewährleistung einer sicheren Funktionsweise der einzelnen Arbeitsvorrichtungen ist eine zuverlässige und stabile Leistungsübertragung erforderlich. Zu diesem Zweck ist jedem Keilriementrieb eine einfach oder doppelt wirkende Spanneinrichtung zugeordnete, die eine optimale Riemenspannung ermöglicht.

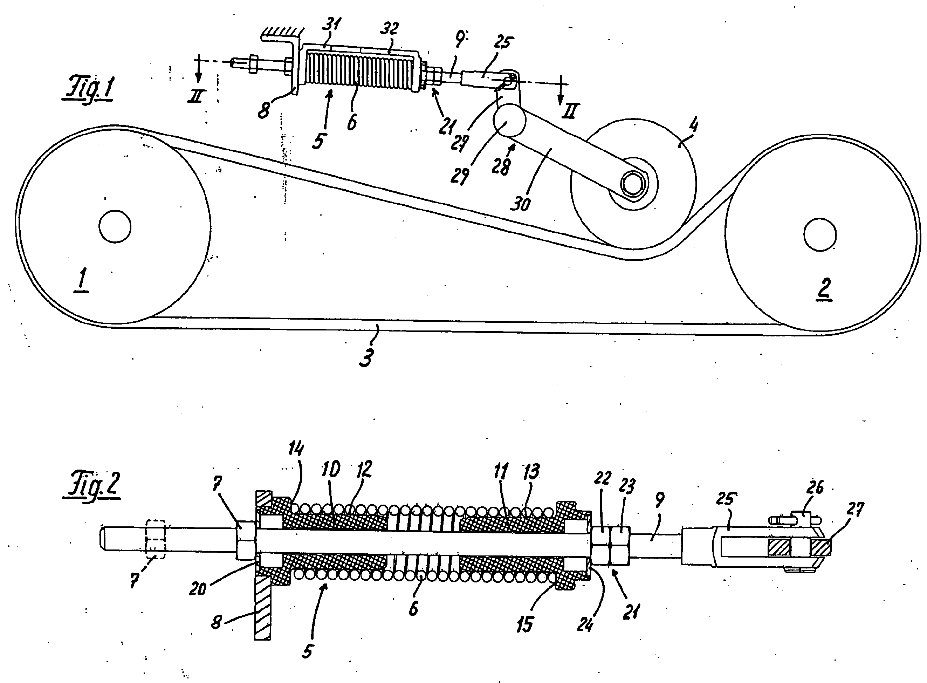

Bei der in Fig. 1 und 2 dargestellten einfach wirkenden Spanneinrichtung wirkt auf den zwischen zwei Keilriemenscheiben 1,2 verlaufenen Keilriemen 3 eine federbelastete Spannrolle 4 ein. Die jeweils wirkende erforderliche Riemenspannung wird durch eine in einer Federhalterung 5 angeordnete Druckfeder 6 erzeugt, deren Vorspannung über eine Stellmutter 7 einstellbar ist. Die Federhalterung 5 ist an einer mit dem Maschinenrahmen fest verbundenen Konsole 8 befestigt. Auf einer durchgehenden Koppelstange 9, die mit einem Gewinde versehen ist, sind zwei vorzugsweise aus Kunststoff bestehende, im wesentlichen form- und abmessungsgleiche Führungshülsen 10,11 für die Druckfeder 6 mit Abstand gegensinnig angeordnet. Die Führungshülsen 10,11 weisen jeweils am äußeren Umfang einen nach innen gerichteten Federführungsbereich 12,13 mit einem stirnseitigen Anlagebund 14,15 auf. Zwischen den beiden Anlagebunden 14,15 ist die Druckfeder 6 angeordnet. Am äußeren Umfang des Federführungsbereiches 12,13 sind wechselweise in Längsrichtung verlaufende Anlageflächen 16 für die Federwindungen der Druckfeder 6 und dazwischen liegende anlagefreie Flächen 17 mit einem geringeren Durchmesser angeordnet. Diese Ausführung ermöglicht eine exakte Frührung der Druckfeder 6 und durch eine verringerte Berührungsfläche eine Reduzierung der zwischen den Führungshülsen 10,11 und der Druckfeder 6 auftretenden Reibung. Die innere Gleitfläche der Führungshülsen 10,11 für die Koppelstange 9 ist als glatte zylindrische Bohrung 18 ausgebildet. Im äußeren Endbereich der Führungshülsen 10,11 sind ebenfalls zur Reibungsminderung der an der stirnseitigen Fläche anliegenden Scheiben bzw. Muttern mehrere am inneren Umfang verteilte, in radialer Richtung verlaufende Aussparungen 19 angeordnet. Die Einstellung der für den jeweiligen Keilriementrieb erforderlichen Vorspannung der Druckfeder 6 erfolgt über eine am freien Endbereich der Koppelstange 9 neben der Konsole 8 angeordnete Stellmutter 7. Zwischen der Stellmutter 7 und der äußeren Stirnfläche der Führungshülse 10 ist eine Scheibe 20 angebracht. Beim Spannvorgang wird die Stellmutter 7 gegen einen festen Anschlag 21 gedreht. Der Anschlag 21 befindet sich auf der gegenüberliegenden Seite der Koppelstange 9 neben der Führungshülse 11. Er besteht aus zwei nebeneinander angeordneten Muttern 22,23, die an einer Scheibe 24 am äußeren Ende der Führungshülse 11 anliegen. Nach der erfolgten Einstellung der Vorspannung der Druckfeder 6 und der Montage der Spannrolle 4 wird die Vorspannung durch Zurückdrehen der Stellmutter 7 wieder freigegeben. Die eingestellte Federspannung wirkt nunmehr über die Spannrolle 4 auf den Keilriemen 3 ein.

In den Fig. 1 bis 4 ist die Stellmutter 7 in der Einstellstellung mit Volllinien und in der Arbeitsstellung mit unterbrochenen Linien dargestellt. An der Anschtagseite ist die Koppelstange 9 mit einem Gabelstück 25 verbunden, an dem an einem Bolzen 26 der kurze Hebelarm 27 eines Doppelhebels 28 befestigt ist. Der Doppelhebel 28 ist an einer Achse 29 schwenkbar gelagert. Am freien Ende des langen Hebelarmes 30 ist die Spannrolle 4 für den Keilriemen 3 drehbar gelagert. Beide Führungshülsen 10,11 sind mit je einem nach innen gerichteten Anzeigestab 31,32 versehen, auf denen Markierungen für die erforderliche Spannung der Druckfeder 6 angebracht sind. Die freien Enden der Anzeigestäbe 31,32 korrespondieren miteinander. Ihre jeweilige Lage zueinander zeigt die eingestellte bzw. die wirkende Spannung der Druckfeder 6 an. Die beiden Anzeigestäbe 31,32 verlaufen je nach Einstellung in einer Ebene oder parallel zueinander. Der Markierungsbereich der Anzeigestäbe 31,32 ist mit Abflachungen 33,34 versehen, die vorzugsweise einen halbkreisförmigen Querschnitt aufweisen.

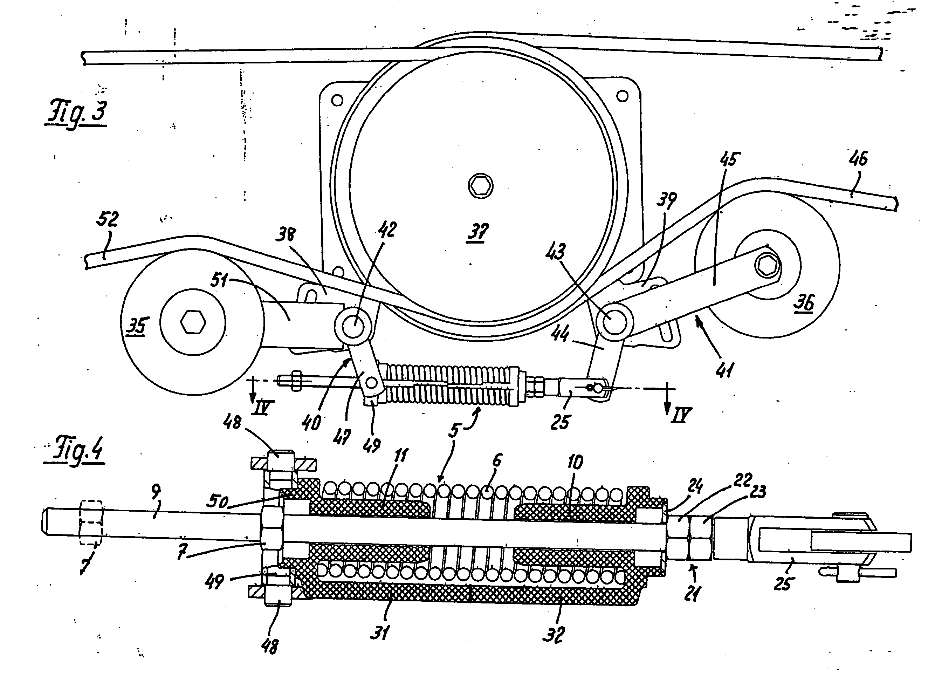

Bei der in den Fig. 3 und 4 dargestellten doppelt wirkenden Spanneinrichtung werden zwei Spannrollen 35,36 für zwei Keilriementriebe gemeinsam betätigt. Die Federhalterung 5 für die einstellbare Druckfeder 6 ist dazu oberhalb einer Doppelkeilriemenscheibe 37 angeordnet. Beiderseits der Doppelkeilriemenscheibe 37 sind am Maschinenrahmen Konsolen 38,39 befestigt, an denen je ein Doppelhebel 40,41 an Schwenkachsen 42,43 gelagert ist. Der Kurze Hebelarm 44 des Doppelhebels 41 ist mit dem Gabelstück 25 der Federhalterung 5 verbunden. An das Gabelstück 25 schließt sich die Koppelstange 9 an, auf der die beiden Führungshülsen 10,11 für die Druckfeder 6 angeordnet sind. Am freien Ende des langen Hebelarmes 45 ist die Spannrolle 36 drehbar gelagert, die mit dem Keilriemen 46 in Verbindung steht. An der Einstellseite der Federhalterung 5 ist der kurze Hebelarm 47 des Doppelhebels 40 mit einem Zapfen 48 eines Stellringes 49 verbunden. Der Stellring 49 ist auf einem Bund 50 im äußeren Bereich der Führungshülse 11 angeordnet. Über die auf der Koppelstange 9 angeordnete Stellmutter 7, die direkt an der äußeren Stirnfläche der Führungshülse 11 anliegt, erfolgt die Einstellung der Vorspannung der Druckfeder 6. Am langen Hebelarm 51 des Doppelhebels 40 ist für die Spannung des Keilriemens 52 die Spannrolle 35 gelagert. Da beide Doppelhebel 40,41 mit der Federhalterung 5 in Verbindung stehen, wirkt die Spannung der Druckfeder 6 auf beide Spannrollen 35,36 für die Keilriemen 46,52 ein.

Der Aufbau und die Funktionsweise der doppelt wirkenden Spanneinrichtung stimmt im wesentlichen mit der bereits beschriebenen einfach wirkenden Ausführung überein.

Vorstehend wurde der Erfindungsgegenstand beispielsweise bei einem Keilriemenantrieb beschrieben, er ist jedoch für jede Art von Zugmitteltrieben erfindungsgemäß verwendbar.

### BEZUGSZEICHENAUFSTELLUNG

- 1: Keilriemenscheibe
- 2: Keilriemenscheibe
- 3: Keilriemen
- 4: Spannrolle
- 5: Federhalterung
- 6: Druckfeder
- 7: Stellmutter
- 8: Konsole
- 9: Koppelstange
- 10,11: Führungshülsen
- 12,13: Federführungsbereich
- 14,15: Anlagebund
- 16: Anlageflächen
- 17: anlagefreie Flächen
- 18: Bohrung
- 19: Aussparungen
- 20: Scheibe
- 21: Anschlag
- 22,23: Muttern
- 24: Scheibe
- 25: Gabelstück
- 26: Bolzen
- 27: kurzer Hebelarm
- 28: Doppelhebel
- 29: Achse
- 30: Langer Hebelarm
- 31,32: Anzeigestab
- 33,34: Abflachungen
- 35,36: Spannrollen
- 37: Doppelkeilriemenscheibe
- 38,39: Konsole
- 40,41: Doppelhebel
- 42,43: Schwenkachsen
- 44: kurzer Hebelarm
- 45: langer Hebelarm
- 46: Keilriemen
- 47: kurzer Hebelarm
- 48: Zapfen
- 49: Stellring
- 50: Bund
- 51: langer Hebelarm
- 52: Keilriemen

## Patentansprüche

1. Spanneinrichtung für einen Zugmitteltrieb, insbesondere für den Antrieb verschiedenartiger Arbeitsvorrichtungen an landwirtschaftlichen Erntemaschinen, bestehend aus einer Federhalterung (5) für eine lagegeführte und einstellbare Druckfeder (6), wobei deren Federspannung über eine Koppelstange (9) direkt, oder über einen zusätzlichen Hebel (28,40,41) indirekt, mittels einer Spannrolle (4,35,36) auf ein zu spannendes Zugmittel (3,46,52) übertragbar ist, wobei auf der durchgehenden Koppelstange (9) zwei gleichartige Führungshülsen (10,11) mit der dazwischen liegenden Druckfeder (6) mit Abstand in Längsrichtung gegensinnig angeordnet sind,
**dadurch gekennzeichnet, dass**
am Umfang eines Federführungsbereiches (12,13) der Führungshülsen (10,11) wechselweise in Längsrichtung verlaufende Anlageflächen (16) für die Federwindungen der Druckfeder (6) mit dazwischen liegenden anlagefreien Flächen (17) angeordnet sind.

2. Spanneinrichtung nach Anspruch 1,
**dadurch gekennzeichnet,**
**dass** die Führungshülsen (10,11) vorzugsweise aus Kunststoff bestehen.

3. Spanneinrichtung nach Anspruch 1 und 2,
**dadurch gekennzeichnet,**
**dass** die Führungshülsen (10,11) jeweils am äußeren Umfang einen in Längsrichtung nach innen gerichteten Federführungsbereich (12,13) mit einem stirnseitigen Anlagebund (14,15) aufweisen.

4. Spanneinrichtung nach den Ansprüchen 1 bis 3,
**dadurch gekennzeichnet,**
**dass** im in Längsrichtung äußeren Endbereich der Führungshülsen (10,11) mehrere am inneren Umfang verteilte, in radialer Richtung verlaufende Aussparungen (19) angeordnet sind

5. Spanneinrichtung nach den Ansprüchen 1 bis 4,
**dadurch gekennzeichnet,**
**dass** nach erfolgter Einstellung der Vorspannung der Druckfeder (6) und der Montage der Spannrollen (2,35,36) die Vorspannung durch Zurückdrehen einer Stellmutter (7) wieder freigebbar ist.

6. Spanneinrichtung nach den Ansprüchen 1 bis 4,
**dadurch gekennzeichnet,**
**dass** beide Führungshülsen (10,11) mit zumindest je einem in Längsrichtung nach innen gerichteten Anzeigestab (31,32) versehen ist.

## Claims

1. A tensioning device for a pulling means transmission, in particular for the drive of various working apparatuses on agricultural harvesters, comprising a spring holder (5) for an adjustable compression spring (6) which is guided in respect of position, wherein the spring stress thereof can be transmitted to a pulling means (3, 46, 52) to be tensioned by way of a coupling bar (9) directly or by way of an additional lever (28, 40, 41) indirectly by means of a tensioning roller (4, 35, 36), wherein two similar guide sleeves (10, 11) with the compression spring (6) disposed therebetween are arranged on the continuous coupling bar (9) in opposite directions at a spacing in the longitudinal direction,
**characterised in that**
contact surfaces (16) are arranged extending in the longitudinal direction alternately at the periphery of a spring guide region (12, 13) of the guide sleeves (10, 11), for the spring turns of the compression spring (6), with contact-free surfaces (17) arranged therebetween.

2. A tensioning device according to claim 1 **characterised in that** the guide sleeves (10, 11) preferably comprise plastic material.

3. A tensioning device according to claim 1 and claim 2 **characterised in that** the guide sleeves (10, 11) at the outer periphery each have a respective spring guide region (12, 13) which is directed inwardly in the longitudinal direction, with an end contact collar (14, 15).

4. A tensioning device according to claims 1 to 3 **characterised in that** arranged in the end region, which is the outer end region in the longitudinal direction, of the guide sleeves (10, 11) are a plurality of recesses (19) which are distributed at the inner periphery and which extend in the radial direction.

5. A tensioning device according to claims 1 to 4 **characterised in that** after adjustment has been effected in respect of the biasing of the compression spring (6) and fitment of the tensioning rollers (2, 35, 36) the biasing can be released again by turning an adjusting nut (7) back.

6. A tensioning device according to claims 1 to 4 **characterised in that** both guide sleeves (10, 11) is provided with at least one respective indicator bar (31) directed inwardly in the longitudinal direction.

## Revendications

1. Dispositif tendeur pour un mécanisme d'entraînement à traction, en particulier pour l'entraînement de différents dispositifs de travail montés sur des machines agricoles de récolte, composé d'un support de ressort (5) recevant un ressort de compression (6) réglable et guidé en position, dont la tension élastique peut être transmise, directement par une biellette de couplage (9) ou indirectement via un levier supplémentaire (28, 40, 41), par l'intermédiaire d'un galet tendeur (4, 35, 36), à un moyen de traction à tendre (3, 46, 52), deux douilles de guidage (10, 11) similaires étant disposées écartées l'une de l'autre dans la direction longitudinale et en sens inverse sur la biellette de couplage (9) continue, avec le ressort de compression (6) placé entre elles, **caractérisé en ce que**, sur la périphérie d'une zone de guidage du ressort (12, 13) des douilles de guidage (10, 11), sont disposées en alternance des surfaces d'appui (16), orientées dans la direction longitudinale et destinées aux spires du ressort de compression (6), et des surfaces sans appui (17) entre celles-ci.

2. Dispositif tendeur selon la revendication 1, **caractérisé en ce que** les douilles de guidage (10, 11) sont fabriquées de préférence en matière plastique.

3. Dispositif tendeur selon les revendications 1 et 2, **caractérisé en ce que** les douilles de guidage (10, 11) présentent sur leur circonférence extérieure une zone de guidage de ressort (12, 13) orientée vers l'intérieur dans la direction longitudinale, avec un collet d'appui (14, 15) disposé frontalement.

4. Dispositif tendeur selon les revendications 1 à 3, **caractérisé en ce que** dans la zone d'extrémité extérieure dans la direction longitudinale, il est prévu plusieurs évidements (19) orientés dans la direction radiale et distribués sur la circonférence intérieure.

5. Dispositif tendeur selon les revendications 1 à 4, **caractérisé en ce que**, après réglage de la précontrainte du ressort de compression (6) et montage des galets tendeurs (2, 35, 36), la précontrainte peut être relâchée en tournant à l'envers un écrou de réglage (7).

6. Dispositif tendeur selon les revendications 1 à 4, **caractérisé en ce que** les deux douilles de guidage (10, 11) sont dotées d'au moins une tige graduée (31, 32) orientée vers l'intérieur dans la direction longitudinale.
